# EUROPEAN PATENT APPLICATION

(11) **EP 1 586 927 A1**
(43) Date of publication of application: **19.10.2005**
(21) Application number: 05007980.5
(22) Date of filing: 12.04.2005
(51) Int. Cl.: G02B 7/02

(54) **Temperature compensation structure for lens device**

(30) Priority: 16.04.2004 JP 2004121522
(71) Applicant: Fujinon Corporation, Saitama-shi, Saitama (JP)
(72) Inventor: Yamamoto, Shigeru, Saitama-shi Saitama (JP)
(74) Representative: Klunker . Schmitt-Nilson . Hirsch

(57) **Abstract**

A lens device is composed of a focus correction lens for correcting an out-of-focus state owing to the change in temperature and two first rings and two second rings which are different in linear expansion coefficient and are disposed so as to be overlaid alternately and coaxially around the photographic optical axis, wherein one end portion of the first ring positioned at the outermost circumference is secured to the lens barrel of the lens device, the other end portion of the first ring is connected to the other end portion of the outer second ring disposed inside the first ring, one end portion of the second ring is connected to one end portion of the inner first ring disposed inside the second ring, the other end portion of the first ring is connected to the other end portion of the inner second ring disposed inside the first ring, and one end portion of the second ring is secured to the holding frame of the focus correction lens.

## Description

### BACKGROUND OF THE INVENTION

### TECHNICAL FIELD OF THE INVENTION

The present invention relates to a temperature compensation structure for a lens device, more particularly, to a temperature compensation structure for a lens device, capable of automatically correcting an out-of-focus state owing to the change in temperature.

### DESCRIPTION OF THE RELATED ART

A lens device for a TV camera, such as an ENG lens being used in a TV camera, is designed so as to come into focus at a predetermined image formation position at a temperature of 20°C, for example. Hence, the lens barrel thermally expands or contracts depending on the atmospheric temperature at a photographing site, thereby causing a problem of displacing the in-focus position from the image formation position. To solve this problem, temperature compensation structures for automatically correcting an out-of-focus state owing to the change in temperature have been proposed conventionally (in JP-A-54-19757, for example).

The temperature compensation structure in accordance with JP-A-54-19757 corrects an out-of-focus state by canceling out the movement amount of a lens mounted on a metal barrel owing to the change in temperature with the movement amount of a lens mounted on a resin barrel owing to the change in temperature using the difference in linear expansion coefficient between the metal and the resin.

However, although a structure capable of having a large lens correction movement amount is desired as a temperature compensation structure, the metal barrel and the resin barrel of the temperature compensation structure in accordance with JP-A-54-19757 are required to be lengthened in the direction of the photographic optical axis so as to have a large lens correction movement amount. Hence, the lens device becomes long in the direction of the photographic optical axis, thereby having a defect of being made large unnecessarily.

### SUMMARY OF THE INVENTION

In consideration of this type of circumstance, the present invention is intended to provide a temperature compensation structure for a lens device, capable of increasing its lens correction movement amount without making the lens device large.
(1) The present invention provides a lens device equipped with a focus correction lens for correcting an out-of-focus state owing to the change in temperature, being characterized in that two first rings and two second rings, being different in linear expansion coefficient, are disposed so as to be overlaid alternately and coaxially around the photographic optical axis, and that one end portion of the first ring positioned at the outermost circumference is secured to the lens barrel of the lens device, the other end portion of the first ring is connected to the other end portion of the outer second ring disposed inside the first ring, one end portion of the second ring is connected to one end portion of the inner first ring disposed inside the second ring, the other end portion of the first ring is connected to the other end portion of the inner second ring disposed inside the first ring, and one end portion of the second ring is secured to the holding frame of the focus correction lens.
(2) Furthermore, the present invention provides a lens device equipped with a focus correction lens for correcting an out-of-focus state owing to the change in temperature, being characterized in that multiple first rings and multiple second rings, being different in linear expansion coefficient, are disposed, and that one end portion of the first ring positioned at the outermost circumference is secured to the lens barrel of the lens device, the other end portion of the first ring is connected to the other end portion of the second ring disposed inside the first ring, and one end portion of the second ring is connected to one end portion of the first ring disposed inside the second ring, whereby the other end portion of the second ring is connected to the other end portion of the first ring and one end portion of the second ring is connected to one end portion of the first ring so that the first ring and the second ring are disposed coaxially and alternately, and finally one end portion of the second ring is secured to the holding frame of the focus correction lens.

In the present invention, for example, in the case that the first rings are made of a metal having a nearly zero linear expansion coefficient and that the second rings are made of a resin having a large linear expansion coefficient, the first ring positioned at the outermost circumference does not expand or contract with the change in temperature, but the second ring disposed inside and connected to this first ring expands or contracts by a predetermined amount (a) to either side in the direction of the optical axis. Furthermore, the first ring disposed inside and connected to this second ring does not expand or contract with the change in temperature, but the second ring disposed inside and connected to this first ring expands or contracts by a predetermined amount (a) to either side in the direction of the optical axis. In the case that the end portion of this second ring is secured to the focus correction lens side, the correction movement amount of the focus correction lens is the total (2a) of the expansion amounts of the two second rings.

In other words, the temperature compensation structure in accordance with the present invention can obtain the correction movement amount 2a using the two second rings as described above. Since the two second rings are overlaid coaxially around the photographic optical axis, the temperature compensation structure can obtain a correction movement amount twice the correction movement amount obtained by using the length of the second ring, that is, by using the length of one ring, in the direction of the photographic optical axis. Therefore, when the temperature compensation structure in accordance with the present invention is compared with a temperature compensation structure having the connection length of the two second rings connected in the direction of the photographic optical axis, the lens device does not become long unnecessarily in the direction of the photographic optical axis, and the lens device is made compact.

Furthermore, since the temperature compensation structure in accordance with the present invention is equipped with multiple first rings and multiple second rings as set forth in (2), it can obtain a correction movement amount multiple times the correction movement amount obtained by using the length of the second ring, that is, the length of one ring, in the direction of the photographic optical axis.

In the temperature compensation structure for the lens device in accordance with the present invention, multiple first rings and multiple second rings having different diameters and different linear expansion coefficients are disposed so as to be overlaid alternately and coaxially around the photographic optical axis and so as to be connected at respective predetermined positions. Furthermore, one end portion of the first ring positioned at the outermost circumference is secured to the lens barrel side, and one end portion of the second ring positioned at the innermost circumference is secured to the focus correction lens side. Hence, the lens correction movement amount can be increased without making the lens device large.

### BRIEF DESCRIPTION OF THE DRAWINGS

FIG. 1 is a side view showing a TV camera apparatus to which a temperature compensation structure for a lens device in accordance with a first embodiment is applied.
FIG. 2 is a sectional side view showing the main sections of the temperature compensation structure for the lens device in accordance with the first embodiment.
FIG. 3 is an enlarged sectional view showing the main sections of the temperature compensation structure for the lens device in accordance with the first embodiment.
FIG. 4 is an enlarged sectional view showing the main sections of a temperature compensation structure for a lens device in accordance with a second embodiment.

### DETAILED DESCRIPTION OF THE INVENTION

Preferred embodiments of a temperature compensation structure for a lens device in accordance with the present invention will be described below in detail referring to the accompanying drawings.

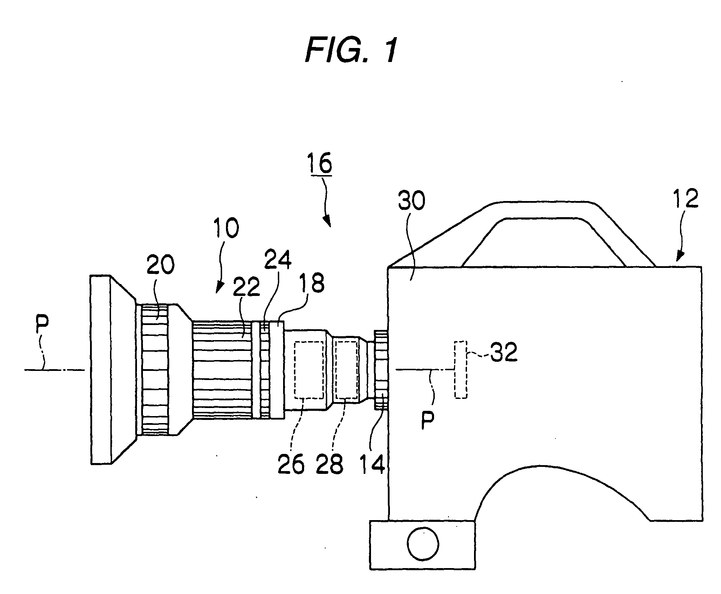

FIG. 1 is a side view showing a TV camera apparatus 16 in which a lens device 10 having a temperature compensation structure in accordance with an embodiment of the present invention is mounted on the mount section 14 of a TV camera 12. In the lens device 10, a focus ring 20, a zoom ring 22 and an iris ring 24 are respectively installed on a stationary lens barrel 18 so as to be rotatable therearound. When the focus ring 20 is rotated manually or by a drive unit not shown, a focus lens, not shown, built in the lens barrel 18 is moved back and forth along a photographic optical axis P by a feed mechanism, such as a helicoid gear mechanism, and focusing is carried out. In addition, when the zoom ring 22 is rotated similarly, a zoom lens, not shown, built in the lens barrel 18 is moved back and forth along the photographic optical axis P, and zooming is carried out. Furthermore, when the iris ring 24 is rotated, an iris diaphragm device, not shown, built in the lens barrel 18 is driven, and its aperture value is set at a desired value.

On the TV camera 12 side of the iris diaphragm device, a front master lens (focus correction lens) 26 and a rear master lens 28 are disposed in this order as indicated by broken lines in FIG. 1. Hence, the image of an object, having passed through the focus lens, the zoom lens, the iris diaphragm device, the front master lens 26 and the rear master lens 28, is formed on the image formation face of a CCD 32 built in the main body 30 of the TV camera 12.

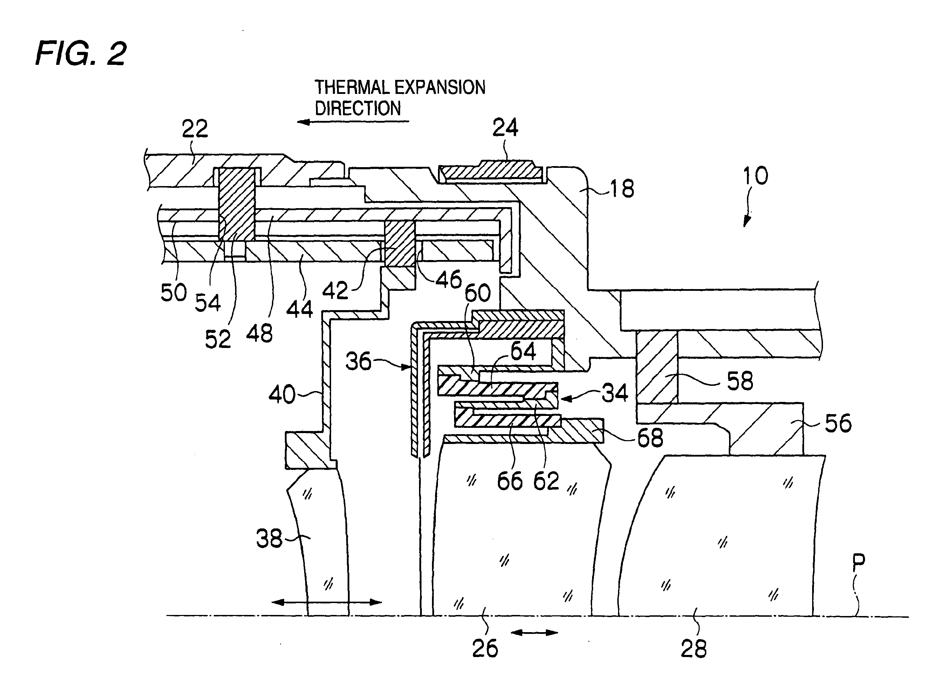

FIG. 2 is an enlarged sectional view showing the vicinity of the front master lens 26 serving as a focus correction lens. The front master lens 26 is moved back and forth along the photographic optical axis P by a temperature compensation structure 34 in accordance with this embodiment, and an out-of-focus state owing to the change in temperature is corrected. This temperature compensation structure 34 will be described later.

On the object side (the left side in FIG. 2) of the front master lens 26, the above-mentioned iris diaphragm device 36 is disposed. This iris diaphragm device 36 is driven by rotating the iris ring 24 rotatably supported on the lens barrel 18, and its diaphragm opening is made larger or smaller.

In addition, on the object side of the iris diaphragm device 36, a rear lens 38 constituting the above-mentioned zoom lens is disposed. This rear lens 38 is held with a lens holding frame 40, and a cam pin 42 protruding from the end portion of the lens holding frame 40 is fitted in a cam groove 46 formed in a cam cylinder 44. Furthermore, the cam pin 42 passes through the cam groove 46, and its end portion is fitted in a straight groove 50 formed in a stationary cylinder 48. Although the stationary cylinder 48 is secured to the lens barrel 18, the cam cylinder 44 is disposed so as to be rotatable around the photographic optical axis P. A connection pin 52 is disposed so as to protrude at a predetermined position on this cam cylinder 44, and this connection pin 52 is secured to the inner circumferential face of the zoom ring 22 via a slit 54 formed in the stationary cylinder 48 in a direction perpendicular to the photographic optical axis P. Hence, when the zoom ring 22 is rotated, the cam cylinder 44 is rotated around the photographic optical axis P via the connection pin 52, whereby the rear lens 38 is moved back and forth along the photographic optical axis P by the straight guide action using the cam groove 46 and the straight groove 50. On the object side of the rear lens 38, a front lens (not shown) constituting the zoom lens is provided, and this front lens is also driven by a similar drive mechanism. Zooming is carried out by the movement of the front lens and the rear lens 38.

On the TV camera 12 side (the right side in FIG. 2) of the front master lens 26, the rear master lens 28 is disposed. The rear master lens 28 is held with a lens holding frame 56, and this lens holding frame 56 is secured to the lens barrel 18 via a connection member 58, thereby being secured at a predetermined position on the rear section of the lens barrel 18.

Next, the temperature compensation structure 34 will be described below.

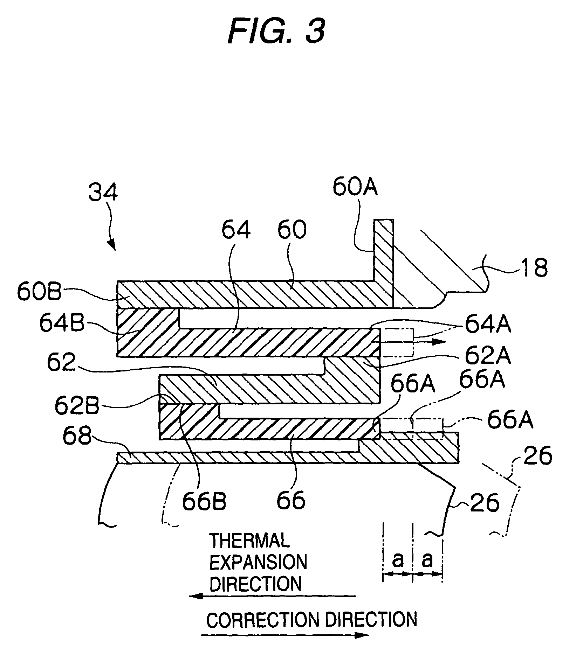

The temperature compensation structure 34 in accordance with this embodiment is composed of two large and small metal rings (first rings) 60 and 62, and two large and small resin rings (second rings) 64 and 66. These rings 60, 62, 64 and 66 have diameters being different from one another as shown in FIG. 3 and are disposed so as to be overlaid alternately and coaxially around the photographic optical axis P.

The right end portion (one end portion) 60A of the metal ring 60 positioned at the outermost circumference, bent 90° as shown in FIG. 3, is secured to the lens barrel 18. In addition, the left end portion (the other end portion) 60B of the metal ring 60 is secured to the left end portion (the other end portion) 64B of the resin ring 64 disposed inside the metal ring 60. The right end portion (one end portion) 64A of the resin ring 64 is secured to the right end portion (one end portion) 62A of the metal ring 62 disposed inside the resin ring 64, and the left end portion (the other end portion) 62B of the metal ring 62 is secured to the left end portion (the other end portion) 66B of the resin ring 66 disposed inside the metal ring 62. Furthermore, the right end portion (one end portion) 66A of the resin ring 66 is secured to the lens holding frame 68 of the front master lens 26, the lens holding frame 68 being disposed inside the resin ring 66. Hence, the front master lens 26 is supported by the lens barrel 18 via the temperature compensation structure 34.

Next, the action of the temperature compensation structure 34 configured as described above will be described below.

In the case that the TV camera apparatus 16 is used under a high-temperature environment, the lens barrel 18 of the lens device 10 thermally expands by the amount (2a) corresponding to the linear expansion coefficient of the lens barrel 18 from the mount section 14 of the TV camera 12 to the object side (in the thermal expansion direction indicated by an arrow in FIG. 2). At this time, in the case of a lens device not equipped with the temperature compensation structure 34, all the lenses are moved toward the object side by the amount of the thermal expansion of the lens barrel 18, whereby the image of the object becomes out of focus as a matter of course.

In the temperature compensation structure 34 in accordance with this embodiment, since the metal ring 60 positioned at the outermost circumference as shown in FIG. 3 is made of a metal having a nearly zero linear expansion coefficient, it does not expand or contract with a change in temperature. The resin ring 64 disposed inside and connected to this metal ring 60 thermally expands by the amount (a) corresponding to its linear expansion coefficient in a correction direction (to the TV camera side) opposite to the thermal expansion direction of the lens barrel 18. Furthermore, although the metal ring 62 disposed inside and connected to this resin ring 64 does not expand or contract with the change in temperature, the resin ring 66 disposed inside and connected to this metal ring 62 thermally expands by the amount (a) corresponding to its linear expansion coefficient in the above-mentioned correction direction. Hence, the total of the expansion amounts of the resin rings 64 and 66 is 2a, and this is canceled out with the thermal expansion amount of the lens barrel 18 having thermally expanded by the amount 2a in the opposite direction. Therefore, the in-focus state is maintained even under the high-temperature environment.

In this way, the temperature compensation structure 34 in accordance with this embodiment can obtain the correction movement amount 2a by using the two resin rings 64 and 66 as described above. Since the two resin rings 64 and 66 are overlaid coaxially around the photographic optical axis P, the temperature compensation structure 34 can obtain a correctionmovement amount twice the correctionmovement amount obtained by using the length of the resin ring 64, that is, the length of one ring, in the direction of the photographic optical axis P.

Hence, when the temperature compensation structure 34 in accordance with this embodiment is compared with a temperature compensation structure having the connection length of the two resin rings 64 and 66 connected in the direction of the photographic optical axis, the lens device 10 does not become long unnecessarily in the direction of the photographic optical axis, and the lens device 10 is made compact.

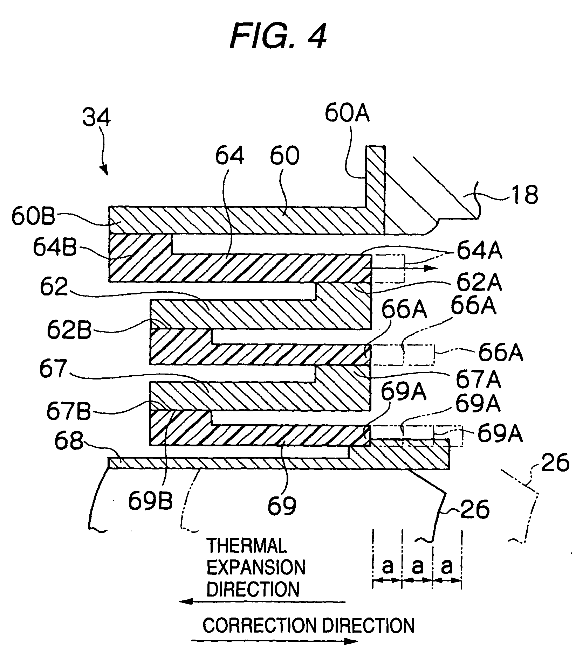

The number of the metal rings and the number of the resin rings are respectively not limited to two. Three or more rings may also be used. FIG. 4 is a sectional view showing a temperature compensation structure wherein three metal rings and three resin rings are provided. To the right end portion (one end portion) 66A of the resin ring 66 disposed on the innermost side of the temperature compensation structure 34 shown in FIG. 3, the right end portion (one end portion) 67A of a metal ring 67 disposed inside the resin ring 66 is secured. The left end portion (the other end portion) 67B of the metal ring 67 is secured to the left end portion (the other end portion) 69B of a resin ring 69 disposed inside the metal ring 67. The right end portion (one end portion) 69A of the resin ring 69 is secured to the lens holding frame 68 of the front master lens 26. This temperature compensation structure can obtain a correction movement amount three times the correction movement amount obtained by using the length of the resin ring 64, that is, the length of one ring, in the direction of the photographic optical axis P.

In the embodiment, although the first rings are metal rings and the second rings are resin rings, the reverse is possible as well.

This application is based on Japanese Patent application JP 2004-121522, filed April 16, 2004, the entire content of which is hereby incorporated by reference. This claim for priority benefit is being filed concurrently with the filing of this application.

## Claims

1. A temperature compensation structure of a lens device, comprising: a focus correction lens that corrects anout-of-focus state owing to a change in temperature; a first ring comprising a first inner ring and a first outer ring; and a second ring comprising a second inner ring and a second outer ring, wherein
the first ring and the second ring are different in linear expansion coefficient and are disposed so as to be overlaid alternately and coaxially around a photographic optical axis, and
a first end portion of the first outer ring positioned at an outermost circumference is secured to a lens barrel of the lens device, a second end portion opposite to the first end portion of the first outer ring is connected to a second end portion of the second outer ring disposed inside the first outer ring, a first end portion of the second outer ring is connected to a first end portion of the first inner ring disposed inside the second outer ring, a second end portion of the first inner ring is connected to a second end portion of the second inner ring disposed inside the first inner ring, and a first end portion of the second inner ring is secured to a holding frame of the focus correction lens.

2. The temperature compensation structure according to claim 1, wherein one of the first ring and the second ring has a linear expansion coefficient of about 0.

3. The temperature compensation structure according to claim 1, wherein one of the first ring and the second ring is a metal ring and the other is a resin ring.

4. A temperature compensation structure of a lens device, comprising: a focus correction lens that corrects an out-of-focus state owing to a change in temperature; a plurality of first rings; and a plurality of second rings, wherein
the first rings and the second rings are different in linear expansion coefficient, and
a first portion of the first ring positioned at the outermost circumference is secured to a lens barrel of the lens device, a second end portion opposite to the first end portion of the first ring is connected to a second end portion of the second ring disposed inside the first ring, anda first endportion of the second ring is connected to a first end portion of the first ring disposed inside the second ring, whereby a second endportion of the second ring is connected to a second end portion of the first ring and a first end portion of the second ring is connected to a first end portion of the first ring so that the first ring and the second ring are disposed coaxially and alternately, and finally a first end portion of the second ring is secured to a holding frame of the focus correction lens.

5. The temperature compensation structure according to claim 4, wherein one of the first rings and the second rings have a linear expansion coefficient of about 0.

6. The temperature compensation structure according to claim 4, wherein one of the first rings and the second rings are metal rings and the other are resin rings.
